(19) Europäisches Patentamt
European Patent Office
Office européen des brevets

(11) **EP 4 622 043 A1**

(12) **EUROPEAN PATENT APPLICATION**

(43) Date of publication:
24.09.2025  Bulletin 2025/39

(21) Application number: 24165267.6

(22) Date of filing: 21.03.2024

(51) International Patent Classification (IPC):
*H02J 7/00* (2006.01)     *H02J 7/34* (2006.01)
*B60L 58/18* (2019.01)     *H01M 10/44* (2006.01)

(52) Cooperative Patent Classification (CPC):
**H02J 7/00304; B60L 58/18; H01M 10/441;
H02J 7/0031; H02J 7/342; H02J 7/345;**
H02J 2310/40

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: VOLVO TRUCK CORPORATION
405 08 Göteborg (SE)
(72) Inventors:
• BORGELSSON MAANINKA, Adam
423 38 TORSLANDA (SE)
• SINGH, Shailesh
417 47 GÖTEBORG (SE)
• LINDEHAMMAR, Karl Johan
431 51 MÖLNDAL (SE)

(74) Representative: Kransell & Wennborg KB
P.O. Box 2096
403 12 Göteborg (SE)

(54) **ASSISTED MULTI-BATTERY PRE-CHARGE STRATEGY**

(57) A computer system (100) comprising processing circuitry (102) configured to: identify one or more electrical energy storage packs (1 10a-b) that have a voltage higher than a voltage threshold related to a voltage connection window of a target electrical energy storage pack (108), close the pre-charge contactor of the one or more identified electrical energy storage packs to thereby pre-charge the voltage (DC) bus using the one or more connected electrical energy storage packs at least until the voltage of the voltage bus exceeds the voltage threshold of the target pack, open the pre-charge contactor (120) of the one or more connected electrical energy storage packs (1 10a-b), and close the main contactor (124, 132) of the target electrical energy storage pack to connect the target electrical energy storage pack to the voltage bus.

Fig. 1

## Description

## TECHNICAL FIELD

The disclosure relates generally to electrical energy storage systems. In particular aspects, the disclosure relates to a method and system for pre-charging a voltage bus for connection of an electrical energy storage pack. The disclosure can be applied to heavy-duty vehicles, such as trucks, buses, and construction equipment among other vehicle types. The disclosure can also be applied to marine applications, industrial applications, and stationary applications. Although the disclosure may be described with respect to a particular vehicle, the disclosure is not restricted to any particular vehicle.

## BACKGROUND

Electrical energy storage packs of a vehicle are typically connected to a voltage link or bus to distribute energy to electrical loads of the vehicle. The consumption of the loads of the voltage link may be too high for a single electrical energy storage pack to pre-charge the voltage link. Thus, full connection of the electrical energy storage pack is not allowed due to risks associated with high rush currents which could damage the electrical energy storage pack or other components such as the contactors. In addition, attempting full connection of the electrical energy storage pack could potentially also be a safety issue.

## SUMMARY

According to a first aspect of the disclosure, there is provided a computer system comprising processing circuitry for connecting a target electrical energy storage pack of an electrical energy storage system comprising multiple electrical energy storage packs to a voltage bus that is connectable to electrical loads associated with capacitances, each electrical energy storage pack comprises a pre-charge circuit including a pre-charge contactor in series with a resistor connected to the voltage bus, and a main contactor connected to the voltage bus in parallel with the pre-charge circuit, the processing circuitry is configured to: identify one or more electrical energy storage packs that have a voltage higher than a voltage threshold related to a voltage connection window of the target electrical energy storage pack, close the pre-charge contactor of the one or more identified electrical energy storage packs to thereby pre-charge the voltage bus using the one or more connected electrical energy storage packs at least until the voltage of the voltage bus is equal to or exceeds the voltage threshold of the target pack, open the pre-charge contactor of the one or more connected electrical energy storage packs, and close the main contactor of the target electrical energy storage pack to connect the target electrical energy storage pack to the voltage bus.

The first aspect of the disclosure may seek to allow connection of a single target electrical energy storage pack to the voltage bus even when the electrical current consumption of the system results in a too high voltage difference between the bus and the target pack for connection during a pre-charge operation of the target pack. A technical benefit may include safe connection of a single electrical energy storage pack to the voltage bus.

A voltage bus may be considered a direct current bus, DC-bus.

A voltage connection window is a voltage window or range in which connection of the target electrical energy storage pack is allowed. The present voltage of the target electrical energy storage pack is within the voltage connection window.

Optionally in some examples, including in at least one preferred example, the voltage threshold may be higher than the present voltage of the target electrical energy storage pack, the processing circuitry may be further configured to: subsequent to opening the pre-charge contactor, allow a waiting time duration so that the voltage of the voltage bus drops towards the voltage level of the target electrical energy storage pack. A technical benefit may include further improved safety for connecting the target electrical energy storage pack since the voltage of the voltage bus is allowed to reach closer to the voltage of the target electrical energy storage pack.

Optionally in some examples, including in at least one preferred example, the processing circuitry may be configured to: close the pre-charge contactor of the target electrical energy storage pack so that the target electrical energy storage pack pre-charge circuit is connected to the voltage bus during the waiting time duration. A technical benefit may include that the voltage bus may discharge some of its energy through the pre-charge resistor of the target electrical energy storage pack, thereby shortening the waiting time duration.

Optionally in some examples, including in at least one preferred example, the processing circuitry may be further configured to: during the waiting time, connect auxiliary devices to the voltage bus to speed up the voltage drop. A technical benefit may include that the voltage bus may discharge some of its energy through the auxiliary devices, thereby shortening the waiting time duration.

Optionally in some examples, including in at least one preferred example, the processing circuitry may be configured to: pre-charge the voltage bus using the one or more connected electrical energy storage packs so that the voltage of the voltage bus exceeds the voltage of the target electrical energy storage pack. In this way it is ensured that the voltage of the voltage bus will drop to a suitable voltage before connecting the target electrical energy storage pack. The voltage of the voltage bus may exceed the voltage window.

Optionally in some examples, including in at least one preferred example, the processing circuitry may be configured to: determine that the voltage of the voltage bus has reached to a connection window of the target electrical energy storage pack, wherein in response, the main contactor of the target electrical energy storage pack is closed by the processing circuitry. Thereby, the single target electrical energy storage pack is safely connected to the voltage bus.

Optionally in some examples, including in at least one preferred example, the processing circuitry may be configured to: close the pre-charge contactor of the one or more identified electrical energy storage packs and the target electrical energy storage pack to connect to and pre-charge the voltage bus. Thus, pre-charging may in this way be finished faster. In addition, since the target electrical energy storage pack assists in pre-charging, less wear is caused in the identified electrical energy storage packs and their pre-charge resistor and contactors.

Optionally in some examples, including in at least one preferred example, the voltage of the target electrical energy storage pack may be less than or equal to the voltage of the one or more identified electrical energy storage packs.

Optionally in some examples, including in at least one preferred example, more than one electrical energy storage pack is identified that have higher voltage than the target electrical energy storage pack. The time for pre-charging to the voltage threshold may in this way be reduced.

There is further provided a vehicle comprising the computer system. There is further provided an electrical energy storage system comprising the computer system.

According to a second aspect of the disclosure, there is provided computer-implemented method for connecting a target electrical energy storage pack of an electrical energy storage system comprising multiple electrical energy storage packs to a voltage bus that is connectable to electrical loads associated with capacitances, each electrical energy storage pack comprises a pre-charge circuit including a pre-charge contactor in series with a resistor connected to the voltage bus, and a main contactor connected to the voltage bus in parallel with the pre-charge circuit, the method comprising: identifying, by processing circuitry of a computer system, one or more electrical energy storage packs that have a voltage higher than a voltage threshold related to a voltage connection window of the target electrical energy storage pack, closing, by the processing circuitry, the pre-charge contactor of the one or more identified electrical energy storage packs to thereby pre-charge the voltage bus using the one or more connected electrical energy storage packs at least until the voltage of the voltage bus is equal to or exceeds the voltage threshold of the target pack, opening, by the processing circuitry, the pre-charge contactor of the one or more connected electrical energy storage packs, and closing, by the processing circuitry, the main contactor of the target electrical energy storage pack to connect the target electrical energy storage pack to the voltage bus.

The second aspect of the disclosure may seek to allow connection of a single target electrical energy storage pack to the voltage bus even when the electrical current consumption of the system results in a too high voltage difference between the bus and the target pack for an allowed connection. A technical benefit may include safe connection of a single electrical energy storage pack to the voltage bus.

Optionally in some examples, including in at least one preferred example, the voltage threshold is higher than the present voltage of the target electrical energy storage pack, the method may further comprise: subsequent to opening the pre-charge contactor, allowing, by the processing circuitry, a waiting time duration so that the voltage of the voltage bus drops towards the voltage level of the target electrical energy storage pack. A technical benefit may include further improved safety for connecting the target electrical energy storage pack since the voltage of the voltage bus is allowed to reach closer to the voltage of the target electrical energy storage pack.

Optionally in some examples, including in at least one preferred example, the method may comprise: closing, by the processing circuitry, the pre-charge contactor of the target electrical energy storage pack so that the target electrical energy storage pack pre-charge circuit is connected to the voltage bus during the waiting time duration. A technical benefit may include that the voltage bus may discharge some of its energy through the pre-charge resistor of the target electrical energy storage pack, thereby shortening the waiting time duration.

Optionally in some examples, including in at least one preferred example, the method may further comprise: during the waiting time, connecting, by the processing circuitry, auxiliary devices to the voltage bus to speed up the voltage drop. A technical benefit may include that the voltage bus may discharge some of its energy through the auxiliary devices, thereby shortening the waiting time duration.

Optionally in some examples, including in at least one preferred example, the method may comprise pre-charging, by the processing circuitry, the voltage bus using the one or more connected electrical energy storage packs so that the voltage of the voltage bus exceeds the voltage of the target electrical energy storage pack within the connection window. In this way it is ensured that the voltage of the voltage bus will drop to a suitable voltage before connecting the target electrical energy storage pack.

Optionally in some examples, including in at least one preferred example, the method may comprise determining, by the processing circuitry, that the voltage of the voltage bus has reached to a connection window of the target electrical energy storage pack, wherein in response, the main contactor of the target electrical energy storage pack is closed by the processing circuitry.

Thereby, the single target electrical energy storage pack is safely connected to the voltage bus.

Optionally in some examples, including in at least one preferred example, the method may comprise closing, by the processing circuitry, the pre-charge contactor of the one or more identified electrical energy storage packs and the target electrical energy storage pack to connect to and pre-charge the voltage bus. Thus, pre-charging may in this way be finished faster.

There is further provided a computer program product comprising program code for performing, when executed by the processing circuitry, the method of any of the herein disclosed examples.

There is further provided a non-transitory computer-readable storage medium comprising instructions, which when executed by the processing circuitry, cause the processing circuitry to perform the method of any of the herein disclosed examples.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

## BRIEF DESCRIPTION OF THE DRAWINGS

FIG. **1** is an exemplary system diagram of a computer system according to an example.
FIG. **2** is a graph of the voltage of the voltage bus as a function of time during a connection sequence for a target electrical energy storage pack according to an example.
FIG. **3** is a truck according to an example vehicle.
FIG. **4** is a flow-chart of method steps to connect a target pack to a voltage bus according to an example.
FIG. **5** is a signaling diagram according to an example.
FIG. **6** is another view of FIG. **1**, according to an example.
FIG. **7** is a flow chart of an exemplary method to connect a target pack to a voltage bus according to an example.
FIG. **8** is a schematic diagram of an exemplary computer system for implementing examples disclosed herein, according to an example.

## DETAILED DESCRIPTION

The detailed description set forth below provides information and examples of the disclosed technology with sufficient detail to enable those skilled in the art to practice the disclosure.

Connection of electrical energy storage packs to a voltage bus is preferably made when the voltage of the bus is similar to the voltage of the electrical energy storage packs to avoid high rush currents in the main contactor circuits of the electrical energy storage packs and components connected to the voltage bus. Therefore, it is in some situations difficult to connect a single electrical energy storage pack since the standby consumption is too high such that the voltage drop of the pre-charge resistor becomes too high resulting in high rush current upon connection of the main contactor.

Connecting a single target electrical energy storage pack is desirable when for example charging the complete electrical energy storage system and, in such case, the lowest energy electrical energy storage pack should be charged first up to the level of the rest of the energy electrical energy storage packs to get the electrical energy storage system balanced.

Another situation where connecting a single target electrical energy storage pack is desirable is when the electrical energy storage packs have low temperature and the allowed charge and discharge current and/or power ability of the packs is restricted. In such case, connecting several electrical energy storage packs at the same time could lead to a violation of the current or power abilities resulting in high wear or unsafe operation of the electrical energy storage packs.

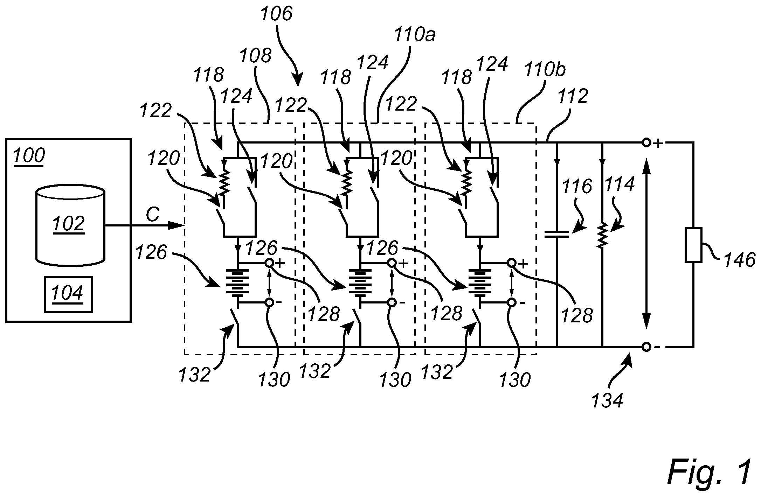

FIG. **1** is an exemplary system diagram of a computer system 100 that comprises processing circuitry 102. The computer system 100 may comprise a non-transitory computer-readable storage medium 104 that comprises instructions for executing, by the processing circuitry 102 methods described.

The computer system 100 is connected to an electrical energy storage system 106 comprising multiple electrical energy storage packs 108, 110a, 110b electrically connectable to a voltage bus 112. The voltage bus 112 is connected to electrical loads 114 associated with capacitances 116. The voltage bus 112 may be considered a DC voltage bus. In the following discussion electrical energy storage packs comprises a target electrical energy storage pack 108 and multiple additional electrical energy storage packs 110a and 110b. Herein, only two additional electrical energy storage packs 110a and 110b are illustrated as an example, but there may be any number of additional electrical energy storage packs.

Each electrical energy storage pack 108, 110a, 110b comprises a pre-charge circuit 118 including a pre-charge contactor 120 in series with a resistor 122 connected to the voltage bus 112, and a main contactor 124 connected to the voltage bus 112 in parallel with the pre-charge circuit 118.

The electrical energy storage pack 108, 110a, 110b further each includes an electrical energy storage device 126 comprising a set of cells electrically connected in series to provide a voltage, V, between a positive pole 128 and a negative pole 130.

A second main contactor 132 is connected between the negative poles 130 and the voltage bus negative side 134. In this example system diagram, the precharge circuit 118 is parallel to the main contactor 124 on the side of positive pole 128. However, it is equally applicable to arrange the pre-charge circuit 118 parallel to the second main contactor 132 on the negative pole 130.

The processing circuitry 102 is configured to control the main contactors 124 and 132, and the precharge contactors 120 between an open state and a closed or engaged state by transmitting control messages C. In the open state electric current is not allowed to flow through the contactor and in the closed or engaged state electric current is allowed to flow through the contactor.

During a pre-charge operation the processing circuitry 102 closes one or more pre-charge contactor 120 which allows an electric current to flow through the pre-charge resistor 122. If a current though the load 114 is such that the voltage drop across a single pre-charge resistor 122 is higher than an allowed voltage for connecting a target electrical energy storage pack 108 with its main contactor 124, then safe connection of the target electrical energy storage pack 108 is not ensured, and this situation is addressed by the examples of the present disclosure.

The processing circuitry 102 is further configured to acquire measurements of the voltages, V, of the electrical energy storage devices 126 from voltage sensors of the respective electrical energy storage packs 108, 110a, 110b.

According to examples of the present disclosure, the processing circuitry 102 is configured to identify one or more electrical energy storage packs 1 10a-b that have a voltage equal to or higher than a voltage threshold related to a voltage connection window of a target electrical energy storage pack 108. In some examples, more than one electrical energy storage pack 1 10a-b is identified that have higher voltage than the target electrical energy storage pack 108.

The voltage connection window is a voltage range including the present voltage of the target electrical energy storage pack 108 in which connection of the target electrical energy storage pack 108 by closing its main contactor 124 is allowable. The voltage threshold may be the lower voltage limit of the voltage connection window, but then the connection time for the target electrical energy storage pack must be zero. Preferably, the voltage threshold is higher than the voltage of the target electrical energy storage pack, with some margin to allow for some voltage drop on the voltage bus. The voltage threshold may exceed the voltage connection window.

The processing circuitry 102 is configured to close the pre-charge contactor 120 of the one or more identified electrical energy storage packs 1 10a-b to thereby pre-charge the voltage bus, and the capacitive loads thereof. The identified electrical energy storage packs 1 10a-b charge the voltage bus 112 at least until the voltage of the voltage bus 112 exceeds the voltage threshold of the target electrical energy storage pack 108.

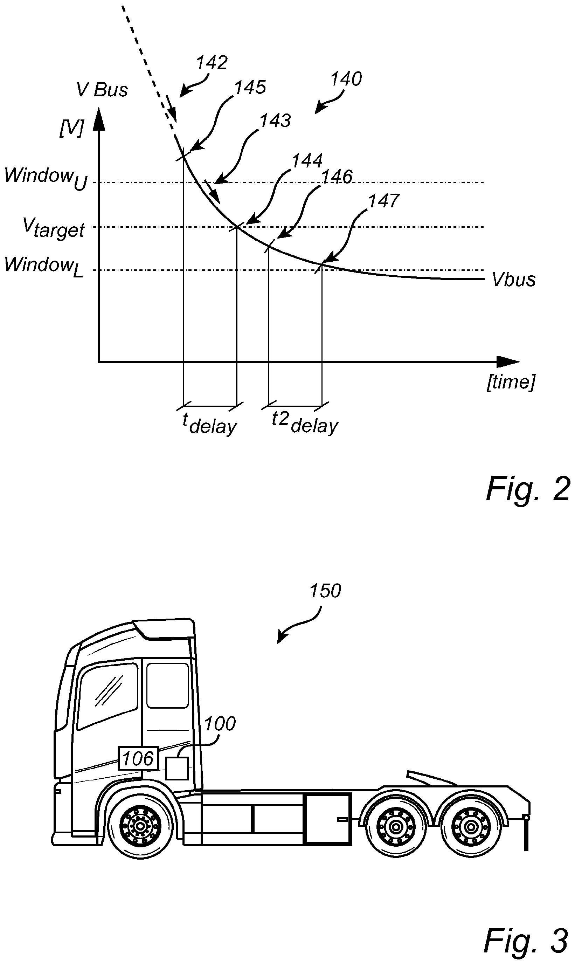

**FIG. 2** is a graph 140 of the voltage of the voltage bus 112 as a function of time during a connection sequence for the target electrical energy storage pack 108. Closing the pre-charge contactor(s) 120 of the one or more identified electrical energy storage packs 1 10a-b cause the voltage of the voltage bus to approach that of the cluster of identified electrical energy storage packs 110a-b.

In **FIG. 2**, the voltage of the target electrical energy storage pack 108, $V_{target}$ is marked along with the upper limit, $window_U$, and lower limit, $window_L$, of the connection window for the target electrical energy storage pack 108. The upper limit, $window_U$, may be $V_{target}$ +margin and the lower limit $window_L$ may be $V_{target}$-margin.

The one or more of the identified electrical energy storage packs 1 10a-b charges the voltage link 112 at least until the voltage of the voltage bus 112 exceeds the lower limit, $window_L$ of the target pack 108. That is, the voltage of the voltage bus 112 needs to reach to a voltage threshold level within, or above, the connection voltage window.

The processing circuitry 102 is configured to open the pre-charge contactor 120 of the one or more connected electrical energy storage packs 1 10a-b when the voltage of the voltage link fulfills the voltage threshold.

Subsequently, the processing circuitry 102 closes the main contactor 124, 132 of the target electrical energy storage pack 108 to connect the target electrical energy storage pack 108 to the voltage bus 112, unless one of the contactors were already closed, for example for enabling the pre-charge circuit, then the other one of the main contactor is closed in this step.

If, during the charging of the voltage bus 112, the voltage of the voltage bus 112 reaches to exceed the upper limit, $window_U$, the processing circuitry allows for a waiting time duration to allow the voltage of the voltage bus 112 to drop into the connection window as indicated by arrow 142.

Charging of the voltage bus 112 should be to a voltage level that provides sufficient time during the subsequent discharge or voltage drop to enable the main contactor 124 of the target electrical energy storage pack 108.

Preferably the main contactor 124, 132 of the target pack should be closed when the $V_{bus} = V_{target}$ to reduce the rush currents, thus having maximized the life length of the main contactor 124, 132, voltage bus capacitors 116 and other components. If the maximum feasible time discharge time is considered to be too short when compared to a total maximum time delay of closing the pre-charge contactor and the main contactors including communication transition and state machine transition time, the voltage level of the voltage bus 112 can be set such that the point where the voltage at which the target packs 108 main contactor 124 is closed is at least within the allowed connection window constrained by the system/contactor specification. In this case extra consideration should also be taken into the power/current abilities of the target pack 108 such that they are not violated when connecting the main contactor of the target pack due to the rush currents that will emerge. The rush current of the target BP can be estimated as

$$i_{BP1} = \frac{V_{bus}(t) - V_{OCV1}}{R_{BP1}}$$

where $R_{BP1}$ is the sum of internal resistance of the target BP and the impedance of cables, connectors etc and $V_{OCV1}$ is the open circuit voltage of the target pack 108.

The most preferred connection point 144 to close the main contactor 124, 132 of the target electrical energy storage pack 108 is when the voltage of the voltage bus 112 is at the voltage of the target electrical energy storage pack 108. In such case, the voltage threshold may be set higher than the present voltage of the target electrical energy storage pack 108. The one or more of the identified electrical energy storage packs 1 10a-b may charge the voltage link 112 at least until the voltage of the voltage bus 112 exceeds the $V_{target}$ with some margin, for example to point 145 which is even higher than the connection window. The processing circuitry 102 is then configured to, subsequent to opening open the pre-charge contactor(s) 120 of the one or more connected electrical energy storage packs 1 10a-b, allow a waiting time duration, $t_{delay}$, so that the voltage V-bus of the voltage bus 112 drops, arrow 143, towards the voltage level, $V_{target}$, of the target electrical energy storage pack 108.

The processing circuitry 102 is configured to determine that the voltage of the voltage bus 112 has reached to the connection window of the target electrical energy storage pack 108, wherein in response, the main contactor 124 of the target electrical energy storage pack 108 is closed by the processing circuitry 102.

In order to speed up the decay of the voltage bus 112 voltage during the waiting time duration, $t_{delay}$, the processing circuitry 102 may close the pre-charge contactor 120 of the target electrical energy storage pack 108 so that the target electrical energy storage pack pre-charge circuit 118 is connected to the voltage bus 112 during the waiting time duration, $t_{delay}$. In this way, the pre-charge resistor 122 of the target electrical energy storage pack 108 assists in dissipating some of the energy in the voltage bus 112. Alternatively, or additionally, the processing circuitry 108 is further configured to, during the waiting time, $t_{delay}$, connect auxiliary devices 146 to the voltage bus 112 to speed up the voltage drop.

Such auxiliary devices may be fans, pumps, generators, relays, or other devices that may assist in dissipating energy in the voltage bus 112.

In some examples, the processing circuitry 102 is configured to close the pre-charge contactor 120 of the one or more identified electrical energy storage packs 1 10a-b and the target electrical energy storage pack 108 to connect to and pre-charge the voltage bus 112. That is, the target electrical energy storage pack 108 may be connected, via its pre-charge resistor 122, to the voltage bus 112 during pre-charging. Preferably, in this case, the voltage of the target electrical energy storage pack 108 is less than or equal to the voltage of the one or more identified electrical energy storage packs 110a-b. In this way, the main contactor 124 of the target electrical energy storage pack 108 can be closed once the voltage bus 112 voltage reaches within the allowed connection voltage window of the target electrical energy storage pack 108.

As long as the connection of the main contactor 124, 132 occur within the connection window, it is a viable connecting action. This means that it is possible to charge the voltage bus 112 to a threshold level 146 which is below the target pack voltage level $V_{target}$ with some margin, and after a time delay $t2_{delay}$, the main contactor 124, 132 of the target electrical energy storage pack 108 is closed by the processing circuitry 102, and the pre-charge contactor of the one or more connected electrical energy storage packs is opened. Note here that $t2_{delay}$ and $t_{delay}$ are of the same duration but at different points along the curve.

**FIG. 3** illustrates a vehicle 150 according to examples of the present disclosure. The vehicle 140 is here shown as a heavy-duty truck but other types of vehicles are also applicable. The vehicle 150 comprises the computer system 100 and the electrical energy storage system 106. The vehicle 150 may comprise a hybrid-, or fully electric driveline.

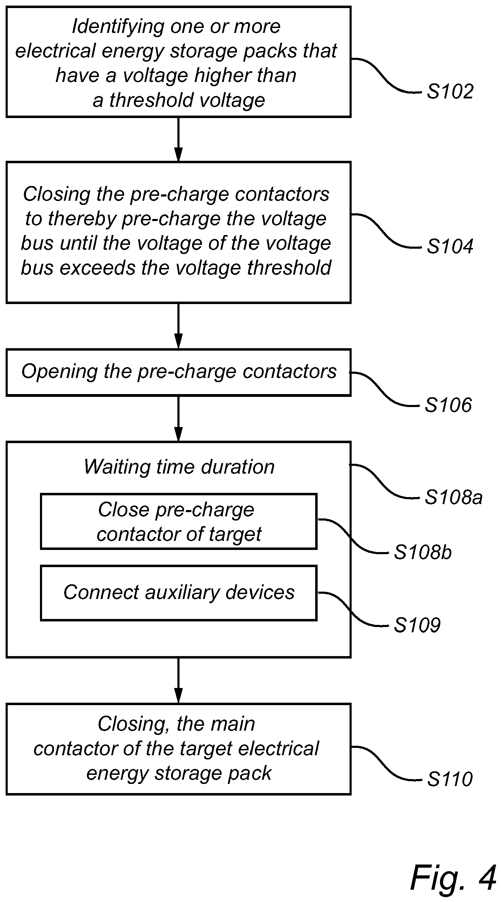

**FIG. 4** is a flow-chart of method steps according to one example.

In step S102, identifying, by processing circuitry 102 of a computer system 100, one or more electrical energy storage packs 110a-b that have a voltage higher than a voltage threshold related to a voltage connection window of a target electrical energy storage pack 108. That is, the processing circuitry 102 determines one or more of the electrical energy storage packs 1 10a-b that has voltage that is higher than or equal to the voltage threshold, e.g., by receiving measurements of their voltages. In step S104, closing, by the processing circuitry 102, the pre-charge contactor 120 of the one or more identified electrical energy storage packs 110a-b to thereby pre-charge the voltage bus 112 by the one or more connected electrical energy storage packs 1 10a-b at least until the voltage of the voltage bus 112 exceeds the voltage threshold of the target pack 108. In some examples, pre-charging proceeds until the voltage of the voltage bus 112 exceeds the present voltage of the target electrical energy storage pack 108, preferably with some margin.

In some examples, the pre-charge contactor 120 also of the target electrical energy storage pack 108 is closed for pre-charging the voltage bus 112. In such case, the voltage of the target electrical energy storage pack 108 is preferably less than or equal to the voltage of the one or more identified electrical energy storage packs 110a-b.

In step S106, opening, by the processing circuitry 102, the pre-charge contactor 120 of the one or more connected electrical energy storage packs 1 10a-b.

In step S110, closing, by the processing circuitry 102, the main contactor 124 of the target electrical energy storage pack to connect the target electrical energy storage pack 108 to the voltage bus. The steps S106 and S110 may be performed in the opposite order compared to what is described above. That is, either the pre-charge contactor 120 is opened before the main contactor 124, 132 are closed, or the main contactor 124, 132 are closed before the pre-charge contactor 120 is opened.

Optionally, subsequent to opening the pre-charge contactor 120 in step S106, allowing in step S108a, by the processing circuitry 102, a waiting time duration so that the voltage of the voltage bus drops towards the voltage level of the target electrical energy storage pack 108. The voltage threshold is higher than the present voltage of the target electrical energy storage pack 108. Thus, in this case the pre-charging is performed such that the voltage of the voltage bus 112 exceeds the voltage of the target electrical energy storage pack 108 and the waiting time allows for the voltage of the voltage bus 112 to drop to a suitable level.

In some examples, the pre-charge contactor 120 of the target electrical energy storage pack 108 is closed in optional step S108b during the waiting time duration. The pre-charge contactor 120 of the target electrical energy storage pack 108 is opened prior to closing the main contactor 124 in step 5110.

In order to increase the pace of the voltage drop, the processing circuitry 102 may connect in step S109 auxiliary devices 146 to the voltage bus 112.

Step S 110, may comprise, determining, by the processing circuitry 102, that the voltage of the voltage bus 112 has reached to a connection window of the target electrical energy storage pack 108, wherein in response, the main contactor 124 of the target electrical energy storage pack is closed by the processing circuitry.

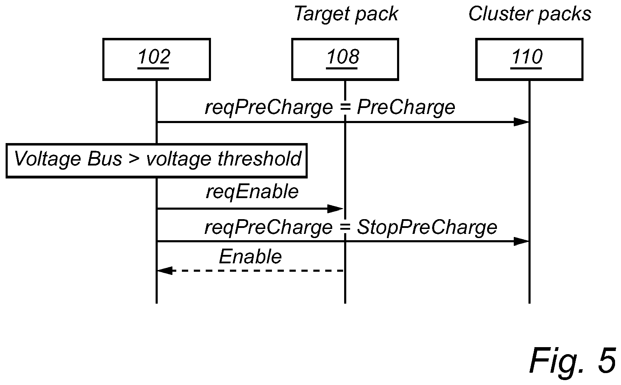

**FIG. 5** is a sequence diagram according to an example sequence. The processing circuitry sends a request, PreCharge, for pre-charging to processing circuitry of the electrical energy storage packs 110 other than the target electrical energy storage pack 108. The processing circuitry 102 monitors the voltage of the voltage bus 112. Once the voltage of the voltage bus 112 exceeds the voltage threshold, the processing circuitry 102 transmits a request, reqEnable, to the processing circuitry of the target electrical energy storage pack 108 to connect the target electrical energy storage pack 108 to the voltage bus 112. Furthermore, the processing circuitry 102 sends a request, StopPreCharge, to processing circuitry of the electrical energy storage packs 110 to stop the pre-charging. The target electrical energy storage pack 108 confirms that it is connected to the voltage bus by a return Enable message.

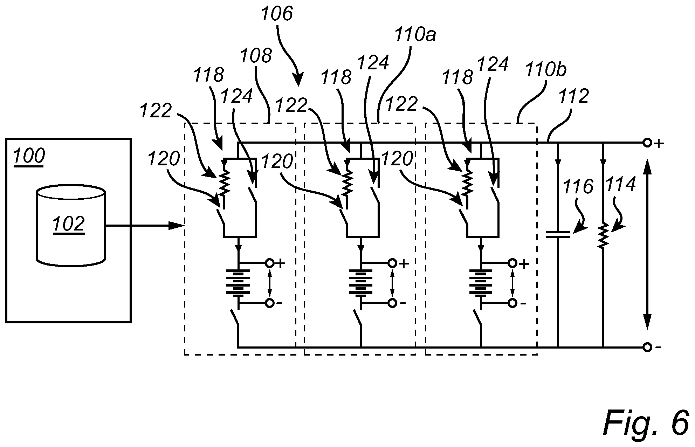

**FIG. 6** is another view of **FIG. 1**, according to an example. FIG 6 is a computer system 100 comprising processing circuitry 102 for connecting a target electrical energy storage pack 108 of an electrical energy storage system 106 comprising multiple electrical energy storage packs 108, 110a-b to a voltage bus 112 that is connectable to electrical loads associated 114 with capacitances 116, each electrical energy storage pack 108, 110a-b comprises a pre-charge circuit 118 including a pre-charge contactor 120 in series with a resistor 122 connected to the voltage bus 112, and a main contactor 124 connected to the voltage bus 112 in parallel with the pre-charge circuit 118, the processing circuitry 102 is configured to: identify one or more electrical energy storage packs 110a-b that have a voltage higher than a voltage threshold related to a voltage connection window of a target electrical energy storage pack 108, close the pre-charge contactor 120 of the one or more identified electrical energy storage packs 110a-b to thereby pre-charge the voltage bus 112 using the one or more connected electrical energy storage packs 110a-b at least until the voltage of the voltage bus 112 exceeds the voltage threshold of the target pack 108, open the pre-charge contactor 120 of the one or more connected electrical energy storage packs 1 10a-b, and close the main contactor 124 of the target electrical energy storage pack 108 to connect the target electrical energy storage pack 108 to the voltage bus 112.

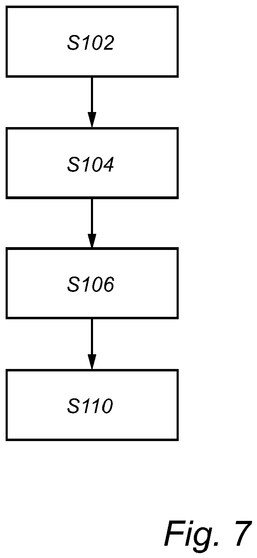

**FIG. 7** is a flow chart of a method to for connecting a target electrical energy storage pack of an electrical energy storage system comprising multiple electrical energy storage packs to a voltage bus that is connectable to electrical loads associated with capacitances, each electrical energy storage pack comprises a pre-charge circuit including a pre-charge contactor in series with a resistor connected to the voltage bus, and a main contactor connected to the voltage bus in parallel with the pre-charge circuit, the method comprising: identifying S102, by processing circuitry of a computer system, one or more electrical energy storage packs that have a voltage higher than a voltage threshold related to a voltage connection window of a target electrical energy storage pack, closing S104, by the processing circuitry, the pre-charge contactor of the one or more identified electrical energy storage packs to thereby pre-charge the voltage (DC) bus using the one or more connected electrical energy storage packs at least until the voltage of the voltage bus exceeds the voltage threshold of the target pack, opening S106, by the processing circuitry, the pre-charge contactor of the one or more connected electrical energy storage packs, and closing S 110, by the processing circuitry, the main contactor of the target electrical energy storage pack to connect the target electrical energy storage pack to the voltage bus.

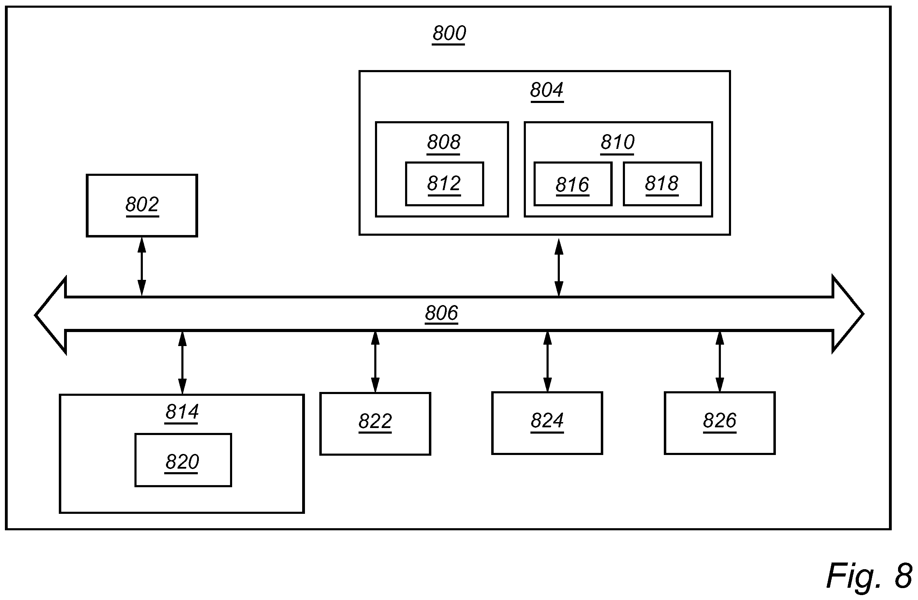

FIG. 8 is a schematic diagram of a computer system **800** for implementing examples disclosed herein. The computer system **800** is adapted to execute instructions from a computer-readable medium to perform these and/or any of the functions or processing described herein. The computer system **800** may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system **800** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **800** may comprise at least one computing device or electronic device capable of including firmware, hardware, and/or executing software instructions to implement the functionality described herein. The computer system **800** may include processing circuitry **802** (e.g., processing circuitry including one or more processor devices or control units), a memory **804**, and a system bus **806**. The computer system **800** may include at least one computing device having the processing circuitry **802**. The system bus **806** provides an interface for system components including, but not limited to, the memory **804** and the processing circuitry **802**. The processing circuitry **802** may include any number of hardware components for conducting data or signal processing or for executing computer code stored in memory **804**. The processing circuitry **802** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **802** may further include computer executable code that controls operation of the programmable device.

The system bus **806** may be any of several types of bus structures that may further interconnect to a memory bus (with or without a memory controller), a peripheral bus, and/or a local bus using any of a variety of bus architectures. The memory **804** may be one or more devices for storing data and/or computer code for completing or facilitating methods described herein. The memory **804** may include database components, object code components, script components, or other types of information structure for supporting the various activities herein. Any distributed or local memory device may be utilized with the systems and methods of this description. The memory **804** may be communicably connected to the processing circuitry **802** (e.g., via a circuit or any other wired, wireless, or network connection) and may include computer code for executing one or more processes described herein. The memory **804** may include non-volatile memory **808** (e.g., read-only memory (ROM), erasable programmable read-only memory (EPROM), electrically erasable programmable read-only memory (EEPROM), etc.), and volatile memory **810** (e.g., random-access memory (RAM)), or any other medium which can be used to carry or store desired program code in the form of machine-executable instructions or data structures and which can be accessed by a computer or other machine with processing circuitry **802**. A basic input/output system (BIOS) **812** may be stored in the non-volatile memory **808** and can include the basic routines that help to transfer information between elements within the computer system **800**.

The computer system **800** may further include or be coupled to a non-transitory computer-readable storage medium such as the storage device **814**, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **814** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **814** and/or in the volatile memory **810**, which may include an operating system **816** and/or one or more program modules **818**. All or a portion of the examples disclosed herein may be implemented as a computer program **820** stored on a transitory or non-transitory computer-usable or computer-readable storage medium (e.g., single medium or multiple media), such as the storage device **814**, which includes complex programming instructions (e.g., complex computer-readable program code) to cause the processing circuitry **802** to carry out actions described herein. Thus, the computer-readable program code of the computer program **820** can comprise software instructions for implementing the functionality of the examples described herein when executed by the processing circuitry **802**. In some examples, the storage device **814** may be a computer program product (e.g., readable storage medium) storing the computer program **820** thereon, where at least a portion of a computer program **820** may be loadable (e.g., into a processor) for implementing the functionality of the examples described herein when executed by the processing circuitry **802**. The processing circuitry **802** may serve as a controller or control system for the computer system **800** that is to implement the functionality described herein.

The computer system **800** may include an input device interface **822** configured to receive input and selections to be communicated to the computer system **800** when executing instructions, such as from a keyboard, mouse, touch-sensitive surface, etc. Such input devices may be connected to the processing circuitry **802** through the input device interface **822** coupled to the system bus **806** but can be connected through other interfaces, such as a parallel port, an Institute of Electrical and Electronic Engineers (IEEE) 1394 serial port, a Universal Serial Bus (USB) port, an IR interface, and the like. The computer system **800** may include an output device interface **824** configured to forward output, such as to a display, a video display unit (e.g., a liquid crystal display (LCD) or a cathode ray tube (CRT)). The computer system **800** may include a communications interface **826** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

Example 1: A computer system comprising processing circuitry for connecting a target electrical energy storage pack of an electrical energy storage system comprising multiple electrical energy storage packs to a voltage bus that is connectable to electrical loads associated with capacitances, each electrical energy storage pack comprises a pre-charge circuit including a pre-charge contactor in series with a resistor connected to the voltage bus, and a main contactor connected to the voltage bus in parallel with the pre-charge circuit, the processing circuitry is configured to: identify one or more electrical energy storage packs that have a voltage higher than a voltage threshold related to a voltage connection window of a target electrical energy storage pack, close the pre-charge contactor of the one or more identified electrical energy storage packs to thereby pre-charge the voltage (DC) bus using the one or more connected electrical energy storage packs at least until the voltage of the voltage bus exceeds the voltage threshold of the target pack, open the pre-charge contactor of the one or more connected electrical energy storage packs, and close the main contactor of the target electrical energy storage pack to connect the target electrical energy storage pack to the voltage bus.

Example 2: The computer system of claim 1, wherein the voltage threshold is higher than the present voltage of the target electrical energy storage pack, the processing circuitry being further configured to: subsequent to opening the pre-charge contactor, allow a waiting time duration so that the voltage of the voltage bus drops towards the voltage level of the target electrical energy storage pack.

Example 3: The computer system of claim 2, wherein the processing circuitry is configured to: close the pre-charge contactor of the target electrical energy storage pack so that the target electrical energy storage pack pre-charge circuit is connected to the voltage bus during the waiting time duration.

Example 4: The computer system of any of claims 2-3, wherein the processing circuitry is further configured to: during the waiting time, connect auxiliary devices to the voltage bus to speed up the voltage drop.

Example: 5: The computer system of any of claims 1-4, wherein the processing circuitry is configured to: pre-charge the voltage bus using the one or more connected electrical energy storage packs so that the voltage of the voltage bus exceeds the voltage of the target electrical energy storage pack within the connection window.

Example 6: The computer system of any of claims 1-5, wherein the processing circuitry is configured to: determine that the voltage of the voltage bus has reached to a connection window of the target electrical energy storage pack, wherein in response, the main contactor of the target electrical energy storage pack is closed by the processing circuitry.

Example 7: The computer system of any of claims 1-6, wherein the processing circuitry is configured to: close the pre-charge contactor of the one or more identified electrical energy storage packs and the target electrical energy storage pack to connect to and pre-charge the voltage bus.

Example: 8: The computer system of claim 7, wherein the voltage of the target electrical energy storage pack is less than or equal to the voltage of the one or more identified electrical energy storage packs.

Example 9: The computer system of any of claims 1-8, wherein more than one electrical energy storage pack is identified that have higher voltage than the target electrical energy storage pack.

Example 10: A vehicle comprising the computer system of any of claims 1-9.

Example 11: A computer-implemented method for connecting a target electrical energy storage pack of an electrical energy storage system comprising multiple electrical energy storage packs to a voltage bus that is connectable to electrical loads associated with capacitances, each electrical energy storage pack comprises a pre-charge circuit including a pre-charge contactor in series with a resistor connected to the voltage bus, and a main contactor connected to the voltage bus in parallel with the pre-charge circuit, the method comprising: identifying, by processing circuitry of a computer system, one or more electrical energy storage packs that have a voltage higher than a voltage threshold related to a voltage connection window of a target electrical energy storage pack, closing, by the processing circuitry, the pre-charge contactor of the one or more identified electrical energy storage packs to thereby pre-charge the voltage (DC) bus using the one or more connected electrical energy storage packs at least until the voltage of the voltage bus exceeds the voltage threshold of the target pack, opening, by the processing circuitry, the pre-charge contactor of the one or more connected electrical energy storage packs, and closing, by the processing circuitry, the main contactor of the target electrical energy storage pack to connect the target electrical energy storage pack to the voltage bus.

Example 12: The method of claim 11, wherein the voltage threshold is higher than the present voltage of the target electrical energy storage pack, the method further comprising: subsequent to opening the pre-charge contactor, allowing, by the processing circuitry, a waiting time duration so that the voltage of the voltage bus drops towards the voltage level of the target electrical energy storage pack.

Example 13: The method of claim 12, comprising: closing, by the processing circuitry, the pre-charge contactor of the target electrical energy storage pack so that the target electrical energy storage pack pre-charge circuit is connected to the voltage bus during the waiting time duration.

Example 14: The method of any of claims 12-13, further comprising: during the waiting time, connecting, by the processing circuitry, auxiliary devices to the voltage bus to speed up the voltage drop.

Example 15: The method of any of claims 11-14, comprising: pre-charging, by the processing circuitry, the voltage bus using the one or more connected electrical energy storage packs so that the voltage of the voltage bus exceeds the voltage of the target electrical energy storage pack within the connection window.

Example 16: The method of any of claims 11-15, comprising: determining, by the processing circuitry, that the voltage of the voltage bus has reached to a connection window of the target electrical energy storage pack, wherein in response, the main contactor of the target electrical energy storage pack is closed by the processing circuitry.

Example 17: The method of any of claims 11-16, comprising: closing, by the processing circuitry, the pre-charge contactor of the one or more identified electrical energy storage packs and the target electrical energy storage pack to connect to and pre-charge the voltage bus.

Example 18: The method of claim 17, wherein the voltage of the target electrical energy storage pack is less than or equal to the voltage of the one or more identified electrical energy storage packs.

Example 19: A computer program product comprising program code for performing, when executed by the processing circuitry, the method of any of claims 11-18.

Example 20: A non-transitory computer-readable storage medium comprising instructions, which when executed by the processing circuitry, cause the processing circuitry to perform the method of any of claims 11-18.

Example 21: An electrical energy storage system comprising the computer system of examples 1-9.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

**Claims**

1. A computer system (100) comprising processing circuitry (102) for connecting a target electrical energy storage pack (108) of an electrical energy storage system comprising multiple electrical energy storage packs (108, 101a-b) to a voltage bus (112) that is connectable to electrical loads (114) associated with capacitances (116), each electrical energy storage pack comprises a pre-charge circuit (118) including a pre-charge contactor (120) in series with a resistor (122) connected to the voltage bus (112), and a main contactor (124) connected to the voltage bus (112) in parallel with the pre-charge circuit (118), the processing circuitry (102) is configured to:

   identify one or more electrical energy storage packs (110a-b) that have a voltage higher than a voltage threshold related to a voltage connection window of the target electrical energy storage pack (108),
   close the pre-charge contactor of the one or more identified electrical energy storage packs to thereby pre-charge the voltage (DC) bus using the one or more connected electrical energy storage packs at least until the voltage of the voltage bus is equal to or exceeds the voltage threshold of the target pack,
   open the pre-charge contactor (120) of the one or more connected electrical energy storage packs (110a-b), and
   close the main contactor (124, 132) of the target electrical energy storage pack to connect the target electrical energy storage pack to the voltage bus.

2. The computer system (100) of claim 1, wherein the voltage threshold is higher than the present voltage of the target electrical energy storage pack, the processing circuitry (102) being further configured to:
   subsequent to opening the pre-charge contactor (120), allow a waiting time duration so that the voltage of the voltage bus drops towards the voltage level of the target electrical energy storage pack (108).

3. The computer system (100) of claim 2, wherein the processing circuitry (102) is configured to:
   close the pre-charge contactor (120) of the target electrical energy storage pack so that the target electrical energy storage pack pre-charge circuit is connected to the voltage bus during the waiting time duration.

4. The computer system (100) of any of claims 2-3, wherein the processing circuitry (102) is further configured to:
   during the waiting time, connect auxiliary devices (146) to the voltage bus (112) to speed up the voltage drop.

5. The computer system of any of claims 1-4, wherein the processing circuitry is configured to:
   pre-charge the voltage bus (112) using the one or more connected electrical energy storage packs (110a-b) so that the voltage of the voltage bus (112) exceeds the voltage of the target electrical energy storage pack (108).

6. The computer system of any of claims 1-5, wherein the processing circuitry is configured to:
   determine that the voltage of the voltage bus (112) has reached to a connection window of the target electrical energy storage pack (108), wherein in response, the main contactor (124, 132) of the target electrical energy storage pack is closed by the processing circuitry.

7. The computer system of any of claims 1-6, wherein the processing circuitry is configured to:
   close the pre-charge contactor (120) of the one or more identified electrical energy storage packs (110a-b) and the target electrical energy storage pack (108) to connect to and pre-charge the voltage bus (112).

8. The computer system of claim 7, wherein the voltage of the target electrical energy storage pack (108) is less than or equal to the voltage of the one or more identified electrical energy storage packs.

9. The computer system of any of claims 1-8, wherein more than one electrical energy storage pack is identified that have higher voltage than the target electrical energy storage pack.

10. A vehicle (150) comprising the computer system of any of claims 1-9.

11. A computer-implemented method for connecting a target electrical energy storage pack of an electrical energy storage system comprising multiple electrical energy storage packs to a voltage bus that is connectable to electrical loads associated with capacitances, each electrical energy storage pack comprises a pre-charge circuit including a pre-charge contactor in series with a resistor connected to the voltage bus, and a main contactor connected to the voltage bus in parallel with the pre-charge circuit, the method comprising:

identifying (S102), by processing circuitry of a computer system, one or more electrical energy storage packs that have a voltage higher than a voltage threshold related to a voltage connection window of the target electrical energy storage pack,
closing (S104), by the processing circuitry, the pre-charge contactor of the one or more identified electrical energy storage packs to thereby pre-charge the voltage (DC) bus using the one or more connected electrical energy storage packs at least until the voltage of the voltage bus is equal to or exceeds the voltage threshold of the target pack,
opening (S106), by the processing circuitry, the pre-charge contactor of the one or more connected electrical energy storage packs, and
closing (S110), by the processing circuitry, the main contactor of the target electrical energy storage pack to connect the target electrical energy storage pack to the voltage bus.

12. The method of claim 11, wherein the voltage threshold is higher than the present voltage of the target electrical energy storage pack, the method further comprising:
subsequent to opening the pre-charge contactor, allowing, by the processing circuitry, a waiting time duration so that the voltage of the voltage bus drops towards the voltage level of the target electrical energy storage pack.

13. The method of claim 12, comprising:
closing, by the processing circuitry, the pre-charge contactor of the target electrical energy storage pack so that the target electrical energy storage pack pre-charge circuit is connected to the voltage bus during the waiting time duration.

14. A computer program product comprising program code for performing, when executed by the processing circuitry, the method of any of claims 11-13.

15. A non-transitory computer-readable storage medium comprising instructions, which when executed by the processing circuitry, cause the processing circuitry to perform the method of any of claims 11-13.

Fig. 1

EP 4 622 043 A1

**Fig. 2**

**Fig. 3**

| Identifying one or more electrical energy storage packs that have a voltage higher than a threshold voltage | — S102 |
| Closing the pre-charge contactors to thereby pre-charge the voltage bus until the voltage of the voltage bus exceeds the voltage threshold | — S104 |
| Opening the pre-charge contactors | — S106 |
| Waiting time duration | — S108a |
| Close pre-charge contactor of target | — S108b |
| Connect auxiliary devices | — S109 |
| Closing, the main contactor of the target electrical energy storage pack | — S110 |

*Fig. 4*

Target pack  Cluster packs

| 102 | | 108 | | 110 |

*reqPreCharge = PreCharge*

Voltage Bus > voltage threshold

*reqEnable*

*reqPreCharge = StopPreCharge*

*Enable*

Fig. 5

Fig. 6

EP 4 622 043 A1

Fig. 7

*Fig. 8*

EP 4 622 043 A1

Europäisches
Patentamt

European
Patent Office

Office européen
des brevets

# EUROPEAN SEARCH REPORT

**Application Number**

EP 24 16 5267

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2023/182620 A1 (CROSMAN III ALEXANDER C [US] ET AL) 15 June 2023 (2023-06-15) * figure 3 * * paragraphs [0002] - [0031] * ----- | 1-15 | INV. H02J7/00 H02J7/34 B60L58/18 H01M10/44 |
| A | US 2015/194707 A1 (PARK JIN-HYUK [KR]) 9 July 2015 (2015-07-09) * figures 4, 6a * * paragraphs [0031] - [0040] * ----- | 1-15 | |
| A | EP 2 803 128 B1 (CPS TECH HOLDINGS LLC [US]) 17 June 2020 (2020-06-17) * figure 1 * * paragraphs [0005], [0049] - [0055] * ----- | 1-15 | |

**TECHNICAL FIELDS SEARCHED (IPC)**

H02J

The present search report has been drawn up for all claims

| Place of search | Date of completion of the search | Examiner |
|---|---|---|
| Munich | 13 August 2024 | Berger, Josef |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 16 5267

This annex lists the patent family members relating to the patent documents cited in the above-mentioned European search report.
The members are as contained in the European Patent Office EDP file on
The European Patent Office is in no way liable for these particulars which are merely given for the purpose of information.

13-08-2024

| Patent document cited in search report | | Publication date | Patent family member(s) | | Publication date |
|---|---|---|---|---|---|
| US 2023182620 | A1 | 15-06-2023 | AU | 2022410087 A1 | 11-07-2024 |
| | | | CN | 118382977 A | 23-07-2024 |
| | | | DE | 112022004896 T5 | 14-08-2024 |
| | | | US | 2023182620 A1 | 15-06-2023 |
| | | | US | 2024227624 A1 | 11-07-2024 |
| | | | WO | 2023114038 A1 | 22-06-2023 |
| US 2015194707 | A1 | 09-07-2015 | KR | 20150081731 A | 15-07-2015 |
| | | | US | 2015194707 A1 | 09-07-2015 |
| EP 2803128 | B1 | 17-06-2020 | CN | 104160585 A | 19-11-2014 |
| | | | EP | 2803128 A2 | 19-11-2014 |
| | | | US | 2013175857 A1 | 11-07-2013 |
| | | | WO | 2013106167 A2 | 18-07-2013 |

EPO FORM P0459

For more details about this annex : see Official Journal of the European Patent Office, No. 12/82